# EUROPEAN PATENT SPECIFICATION

(11) **EP 2 457 669 B1**
(45) Date of publication and mention of the grant of the patent: **03.04.2019**
(21) Application number: 11187562.1
(22) Date of filing: 02.11.2011
(51) Int. Cl.: B05C 5/04, B29C 65/48, B29C 65/00, B05C 5/02, B29C 65/52

(54) **Assembly comprising storage chamber cover and storage chamber, and cloth bonding apparatus comprising the assembly**
Baugruppe umfassend Speicherkammerabdeckung und Speicherkammer, sowie Vorrichtung zum Verbinden von Stoff umfassend die Baugruppe
Assemblage comprenant un couvercle de chambre de stockage et une chambre de stockage, et appareil de liaison de tissus comprenant l'assemblage

(30) Priority: 30.11.2010 JP 2010265872
(43) Date of publication of application: 30.05.2012
(73) Proprietor: Brother Kogyo Kabushiki Kaisha, Nagoya-shi, Aichi 467-8561 (JP)
(72) Inventor: Enya, Tetsuji, Nagoya-shi, Aichi 467-8562 (JP); Nishimura, Kazuto, Nagoya-shi, Aichi 467-8562 (JP); Umeda, Kazutoshi, Nagoya-shi, Aichi 467-8562 (JP); Iwakoshi, Hiroyasu, Nagoya-shi, Aichi 467-8562 (JP); Nemoto, Yoshimitsu, Nagoya-shi, Aichi 467-8562 (JP); Minagawa, Yuichiro, Nagoya-shi, Aichi 467-8562 (JP); Yamaura, Hiroki, Nagoya-shi, Aichi 467-8562 (JP); Horibe, Yoshihiko, Nagoya-shi, Aichi 467-8562 (JP)
(74) Representative: Prüfer & Partner mbB Patentanwälte · Rechtsanwälte

(56) References cited:
- JP-A- H08 175 559
- US-A1- 2008 234 120

## Description

### BACKGROUND

The present invention relates to an assembly comprising a storage chamber cover that is mounted on a storage chamber for an adhesive and to a cloth bonding apparatus that is provided with the storage chamber cover.

A cloth bonding apparatus bonds a cloth to a cloth with an adhesive instead of sewing the cloths together with a needle and a thread. The cloth bonding apparatus is provided with a storage chamber and a nozzle. The storage chamber stores the adhesive and melts the stored adhesive by heating it. The nozzle discharges the adhesive that is melted in the storage chamber and applies the adhesive between the two cloths. The cloth bonding apparatus bonds the two cloths by pressing them together. Because the bonded cloths have not been sewn together with the thread, there is no unevenness in the bonded cloths.

The structures of the cloth bonding apparatus and the storage chamber are disclosed in JP 2010-222764 A. The cloth bonding apparatus raises the air pressure within the storage chamber, extruding the adhesive and supplying it to the nozzle. The interior portion of the storage chamber must therefore be sealed. The sealed storage chamber prevents drying of the adhesive. The storage chamber has a shaft bearing at its upper end, and a cover portion has a shaft portion. The cover portion turns around the shaft portion.

The storage chamber has an opening portion in its upper portion, and the cover portion covers the opening portion.

### SUMMARY

The opening portion in the upper portion of the storage chamber is only covered by the plate-shaped cover portion. Therefore, the possibility exists that the interior portion of the storage chamber cannot be reliably sealed. The temperature of the storage chamber is raised to high, so an operator must wear heat-resistant gloves when the operator opens and closes the plate-shaped cover portion. The heat-resistant gloves are slippery. Therefore, it is difficult for the operator to open and close the cover portion while wearing the heat-resistant gloves.

US 2008/0234120 A1 discloses a storage chamber and a storage chamber cover comprising a tube portion and a top wall. Another storage chamber cover is known from JP H08 175559 A.

The present invention provides an assembly in accordance with claim 1, comprising a storage chamber cover that reliably seals the storage chamber and that can be mounted and removed easily and safely, and a cloth bonding apparatus in accordance with claim 6 that is provided with the storage chamber cover.

This object is achieved by the assembly having the features of claim 1. The present invention is further developed as defined in the dependent claims.

By rotating the storage chamber cover, an operator can firmly fix the screw cover, which has been mounted to the inner side of the storage chamber cover, on the opening portion of the storage chamber. Therefore, the operator can reliably seal off the interior portion of the storage chamber. Because the storage chamber cover is positioned on the outside of the screw cover, the temperature of the storage chamber cover is lower than the temperature of the screw cover when the temperature of the storage chamber is high. Therefore, the operator can fix and remove the screw cover more safely than when the operator rotates the screw cover by touching the screw cover directly. The tube portion of the storage chamber cover has the recessed portion that is recessed toward the inside. The operator can rotate the storage chamber cover by placing his fingers on the recessed portion, so his hand tends not to slip, even when he is wearing the heat-resistant gloves. Therefore, the operator can easily and safely perform the fixing and the removing of the screw cover.

The storage chamber cover may be provided with a vent hole formed on at least one of the tube portion and the top wall. The storage chamber cover can discharge heat from the inside to the outside through the vent hole. The temperature of the storage chamber cover is lower than when the vent hole is not formed. Therefore, the operator can perform work safely.

The storage chamber cover may be mounted on an upper portion of the storage chamber such that the top wall covers the top of the storage chamber. The vent hole may be formed in the top wall side in the recessed portion. Air that has reached a high temperature rises in the storage chamber cover and escapes through the vent hole in the upper portion of recessed portion. Therefore, the vent hole can efficiently inhibit any rise in the temperature of the storage chamber cover. Dirt is less likely to enter the interior of the storage chamber cover from the vent hole than in the case the vent hole is formed in the top wall. The forming of the vent hole in the recessed portion makes it easier for the operator's hand to get a hold in the recessed portion. Therefore, the operator can perform work more easily and safely.

The storage chamber cover may be provided with a projecting portion that is formed on an upper edge portion of the recessed portion to project in a direction away from the central axis of the tube portion. When the operator carries the storage chamber cover with his hand on the recessed portion, the operator's hand gets a hold on the projecting portion. Therefore, it is harder for the operator to drop the storage chamber cover.

The cover fixing portion may be provided with a fixing screw that is screwed into a screw hole formed in the screw cover and with a rotation preventing portion that fits together with one of a fixing concave portion and a fixing projecting portion formed in the screw cover. The storage chamber cover can firmly fix the screw cover with the fixing screw. The screw cover can be prevented from rotating in relation to the storage chamber cover by engaging the rotation preventing portion with the one of the fixing concave portion and the fixing projecting portion of the screw cover. Therefore, the screw cover can be fixed more reliably than when the screw cover is fixed to the storage chamber cover only by the fixing screw. If the operator tightens the fixing screw after engaging the rotation preventing portion with the one of the fixing concave portion and the fixing projecting portion of the screw cover, the screw cover can easily be fixed to the storage chamber cover at the proper angle.

In a second aspect of this invention, a cloth bonding apparatus in accordance with claim 6 is provided, which includes the storage chamber cover, the storage chamber, and the screw cover described above, wherein cloths are bonded with an adhesive that is stored in the storage chamber. Therefore, the cloth bonding apparatus provides the same effects as the storage chamber cover. By using the cloth bonding apparatus, the operator can perform the work of bonding the cloths safely and easily.

### BRIEF DESCRIPTION OF THE DRAWINGS

Exemplary embodiments of the present invention will be described below in detail with reference to the accompanying drawings in which:
FIG. 1 is a perspective view of a cloth bonding apparatus 1;
FIG. 2 is a perspective view of a main portion of a storage portion 30;
FIG. 3 is an exploded oblique view of the main portion of the storage portion 30;
FIG. 4 is a sectional view of a cross section in the direction of a line A-A in FIG. 2 and a center shaft of a storage chamber 31;
FIG. 5 is a plan view of a storage chamber cover 60;
FIG. 6 is a bottom view of the storage chamber cover 60;
FIG. 7 is a right side view of the storage chamber cover 60;
FIG. 8 is a sectional view in the direction of a line B-B in FIG. 5; and
FIG. 9 is a sectional view in the direction of a line C-C in FIG. 5.

### DETAILED DESCRIPTION OF THE EXEMPLARY EMBODIMENTS

Hereinafter, a storage chamber cover 60 according to an embodiment of the present invention and a cloth bonding apparatus 1 that is provided with the storage chamber cover 60 will be explained with reference to the drawings.

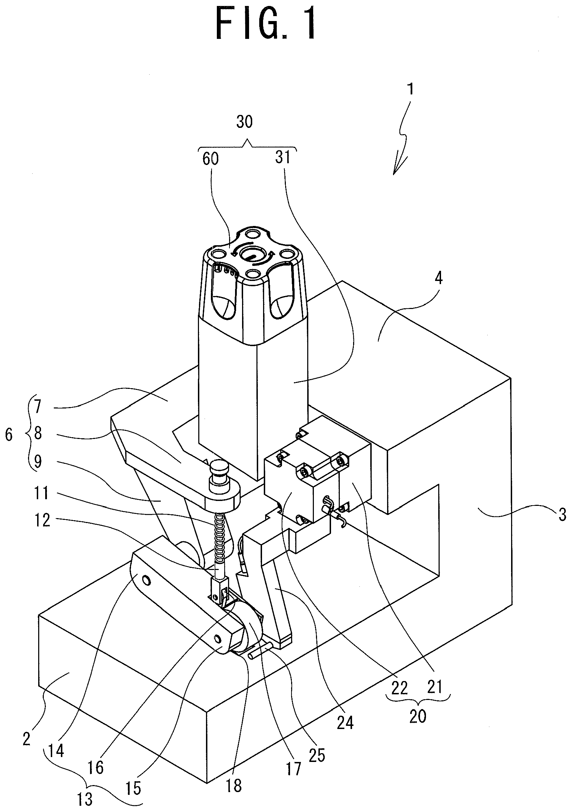

The configuration of the cloth bonding apparatus 1 will be explained with reference to FIG. 1. The lower right side, the upper left side, the upper right side, and the lower left side of the FIG. 1 respectively correspond to the front side, the rear side, the right side and the left side of the cloth bonding apparatus 1. The cloth bonding apparatus 1 is provided with a bed portion 2, a pillar portion 3, and an arm portion 4. The bed portion 2 is mounted to a table (not shown in the drawings). The pillar portion 3 extends vertically upward from the right end of the bed portion 2. The arm portion 4 is connected to the upper end of the pillar portion 3, and projects toward the left from the left side face of the pillar portion 3.

The bed portion 2 is provided with a lower feed roller, a lower feed motor, and the like (not shown in the drawings) in its interior. The lower feed roller is positioned directly below an upper feed roller 17 and drives a belt 18. The lower feed motor drives the lower feed roller. The bed portion 2 serves as a base that supports the pillar portion 3. The pillar portion 3 supports the arm portion 4. The arm portion 4 is provided with a beam portion 6, a storage portion 30, and a pump case 20, in order starting from the rear. The arm portion 4 is provided with various types of motors and the like in its interior.

The beam portion 6 will be explained. The beam portion 6 is provided with a body portion 7, a spring support portion 8, and a column portion 9. The body portion 7 is a roughly rod-shaped member, and it extends in a horizontal direction to the left from the left rear edge of the arm portion 4. The spring support portion 8 is plate-shaped and extends in a horizontal direction toward the front from the left end of the body portion 7. The column portion 9 extends diagonally downward toward the front from the body portion 7 at an angle of approximately 45 degrees from the horizontal plane. The lower end portion of the column portion 9 does not contact with the bed portion 2.

The spring support portion 8 has a hole in its front end portion. An upper end portion of a shaft portion 12 is inserted into the hole, such that the spring support portion 8 supports the shaft portion 12 such that the shaft portion 12 can move up and down. The shaft portion 12 is inserted through a spring 11. The column portion 9 has a shaft on the left side of its lower end that extends in the left-right direction. The column portion 9 support a rear end portion 14 of a roller holding portion 13 by the shaft. The roller holding portion 13 can pivot around the shaft such that a front end portion 15 moves in the up-down direction.

The roller holding portion 13 support the upper feed roller 17 rotatably by the front end portion 15. The upper feed roller 17 is positioned close to and to the rear of a cylindrical nozzle 25. The roller holding portion 13 has a shaft support portion 16 on its upper side, slightly toward the front from the center. The shaft support portion 16 supports the lower end of the shaft portion 12 that has been inserted through the spring 11. The spring 11 is located between the spring support portion 8 and the lower end of the shaft portion 12. The spring 11 energizes the roller holding portion 13 downward by energizing the shaft portion 12 downward. The upper feed roller 17 and the belt 18 move a cloth in the front-rear direction by rotating with the cloth pressed between them.

The pump case 20 will be explained. The pump case 20 is provided with a first pump case 21 and a second pump case 22. The first pump case 21 has a roughly cubic shape and is connected by four screws to the left side face of the arm portion 4. The left side of the first pump case 21 forms a recessed portion, and a gear pump (not shown in the drawings) is provided in the recessed portion. The second pump case 22 is connected by four screws to the left side of the first pump case 21 and covers the gear pump. The first pump case 21 and the second pump case 22 form a pump chamber. The gear pump receives from the storage portion 30 an adhesive that the storage portion 30 has melted by heating and supplies an appropriate amount of the adhesive to the nozzle 25 under pressure.

The bottom portion of the second pump case 22 holds a support portion 24. The support portion 24 extends toward the left from the bottom portion of the second pump case 22 and bends downward at its left end. The bottom end portion of the support portion 24 is slightly separated from the top surface of the bed portion 2. The bottom end of the support portion 24 holds the rod-shaped nozzle 25. The nozzle 25 projects toward the left from the support portion 24. The direction in which the nozzle 25 projects may also be toward the right. The support portion 24 is provided with a feeding channel (not shown in the drawings) in its interior. The feeding channel extends from the gear pump to the nozzle 25. The nozzle 25 discharges the adhesive that has passed through the feeding channel. The pump case 20 and the support portion 24 are provided with heaters (not shown in the drawings) in their interiors. The heaters heat the adhesive that passes through the pump case 20 and the support portion 24. Therefore, the adhesive that the storage portion 30 has heated does not harden on its way to the nozzle 25.

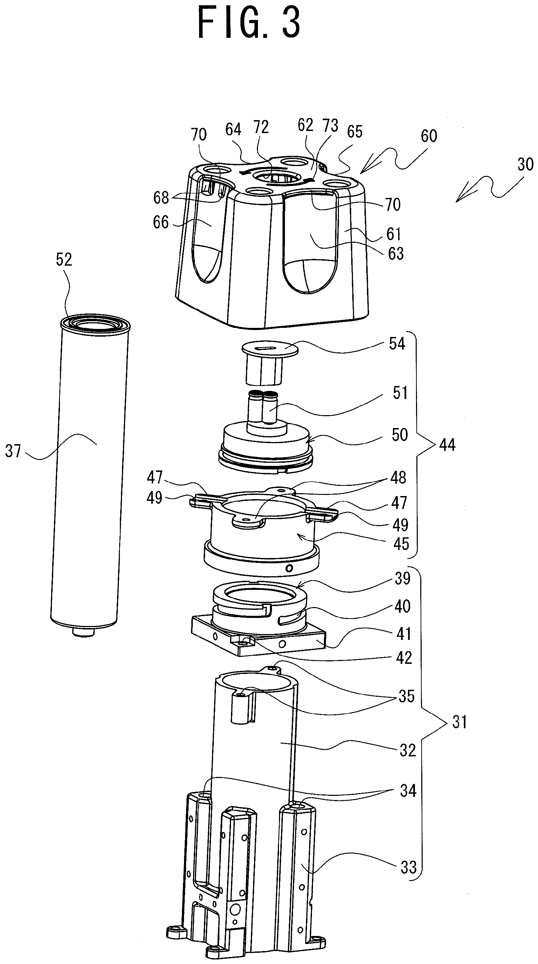

The storage portion 30 has a roughly rectangular shape whose long direction is the up-down direction. The storage portion 30 extends vertically upward from the left side of the arm portion 4 and the rear side portion of the pump case 20. The storage portion 30 is mainly provided with a storage chamber 31, the storage chamber cover 60, and a screw cover 44 (refer to FIG. 3).

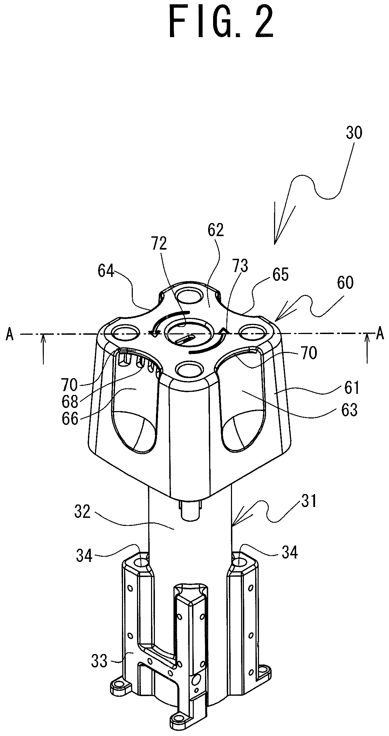

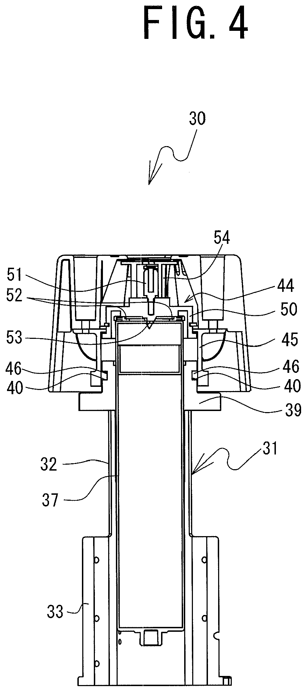

The storage portion 30 will be explained with reference to FIGS. 2 to 4. In order to facilitate the explanation, a square tube-shaped outer frame of the storage chamber 31 is not shown in FIGS. 2 to 4. The storage chamber cover 60 is mounted on the upper portion of the storage chamber 31. In order to melt the adhesive that is stored in its interior, the temperature of the storage chamber 31 is increased by using heat from a storage chamber heater (that is described later). The storage chamber cover 60 is formed from a synthetic resin that has lower thermal conductivity than metal. Therefore, mounting the storage chamber cover 60 on the storage chamber 31 prevents the operator from being burned by directly touching the high-temperature storage chamber 31. As shown in FIGS. 3 and 4, the screw cover 44 is fixed to the interior of the storage chamber cover 60. The screw cover 44 is mounted on the upper portion of the storage chamber 31 by being screwed onto it. Therefore, the operator can mount the screw cover 44 and the storage chamber cover 60 on the upper portion of the storage chamber 31 at the same time simply by rotating the storage chamber cover 60.

The storage chamber 31 will be explained. The storage chamber 31 is provided with a cartridge holding portion 32, leg portions 33, and an opening portion 39.

The cartridge holding portion 32 is a cylindrical member. The operator sets a cylindrical cartridge 37 that is filled with the adhesive in the cartridge holding portion 32 by inserting the cartridge 37 into an opening in the upper portion of the cartridge holding portion 32. The cartridge holding portion 32 has a screw hole 35 in each of the right rear and the left front of its upper end for fixing the opening portion 39 in place. The cartridge 37 is provided with a ring-shaped packing 52 on its bottom face (the face at its upper end in FIG. 3).

The leg portions 33 are formed on the right front side, the right rear side, the left front side and the left rear side of the outer circumferential face of the cartridge holding portion 32. The leg portions 33 extend from the bottom end of the cartridge holding portion 32 to the center in the up-down direction. The leg portions 33 hold the orientation of the cartridge holding portion 32. The leg portions 33 on the right front side and the left rear side each have a heater insertion hole 34 that extends in the up-down direction. Each one of the heater insertion holes 34 holds one of the rod-shaped storage chamber heaters (not shown in the drawings) in its interior. The cloth bonding apparatus 1 melts the adhesive that is inside the cartridge 37 by supplying electricity to the storage chamber heaters.

The opening portion 39 is cylindrical. The opening portion 39 has two helical grooves 40 in its outer circumferential face for mounting the screw cover 44. The shapes of the helical grooves 40 are axially symmetrical around the central axis of the opening portion 39. The bottom end portion of the opening portion 39 is provided with a flange portion 41 that is rectangular in a plan view. The flange portion 41 has a screw hole 42 in each of its right rear corner and its left front corner. The opening portion 39 is fixed in place on the upper portion of the cartridge holding portion 32 by aligning the positions of the two screw holes 42 in the flange portion 41 with the positions of the two screw holes 35 in the cartridge holding portion 32 and fastening the aligned screw holes together with screws. The central axis of the cylindrical opening portion 39 is aligned with the central axis of the cartridge holding portion 32.

The screw cover 44 will be explained. As shown in FIG. 3, the screw cover 44 is provided with a circumference wall portion 45, an upper portion blocking portion 50, and an air line connecting portion 54.

The circumference wall portion 45 is cylindrical. The inside diameter of the circumference wall portion 45 and the outside diameter of the opening portion 39 of the storage chamber 31 are equal. As shown in FIG. 4, the circumference wall portion 45 is provided with two lug portions 46 on its inner face. The two lug portions 46 project toward the inside of the circumference wall portion 45. The two lug portions 46 are formed in positions that are symmetrical in relation to the central axis of the circumference wall portion 45. The operator can mount the screw cover 44 on the opening portion 39 by fitting each of the two lug portions 46 into the corresponding one of the two helical grooves 40 and rotating the screw cover 44 clockwise in a plan view. The operator can remove the screw cover 44 from the opening portion 39 by rotating the screw cover 44 counterclockwise in a plan view. As shown in FIG. 3, the circumference wall portion 45 is provided with two slotted pieces 47 and two unslotted pieces 48 on the edge of its upper end. The top faces of the unslotted pieces 48 are flat. A slot-shaped fixing slot portion 49 is formed in the top face of each of the slotted pieces 47. The operator can easily fix the storage chamber cover 60 and the screw cover 44 in place using the slotted pieces 47 and the unslotted pieces 48. This will be explained in detail later.

The upper portion blocking portion 50 is a roughly disc-shaped member with a recessed lower side. The upper portion blocking portion 50 is provided with a connecting portion 51 in the center of its top face. The connecting portion 51 guides air into the interior of the cartridge 37 from an air line (not shown in the drawings) that supplies compressed air. The force of the compressed air moves the adhesive in the interior of the cartridge 37 toward the gear pump inside the pump case 20 (refer to FIG.

1). As shown in FIG. 4, the upper portion blocking portion 50 is fixed in place on the upper portion of the circumference wall portion 45. The upper portion blocking portion 50 is provided, in the center of its bottom face, with a needle 53 whose lower end projects sharply. When the screw cover 44 is mounted on the opening portion 39, the needle 53 penetrates to the inner side of the packing 52 of the cartridge 37 and makes a hole in the bottom face of the cartridge 37. The hole serves as an inflow channel for the compressed air into the interior of the cartridge 37. At the same time, the packing 52 of the cartridge 37 blocks the gap between the cartridge 37 and the screw cover 44. The air line connecting portion 54 is connected to the air line (not shown in the drawings) and is fitted onto the connecting portion 51 from above.

The storage chamber cover 60 will be explained. As shown in FIG. 2, the shape of the storage chamber cover 60 is roughly that of a square tube that is closed at its upper end. The storage chamber cover 60 is provided with a tube portion 61 and a top wall 62. The length of one side of the upper portion of the tube portion 61 is slightly shorter than the length of one side of the lower portion. In a state in which the storage chamber cover 60 has been mounted on the storage chamber 31, the tube portion 61 covers the outer circumferential face (the side face) of the upper portion of the storage chamber 31. The top wall 62 is formed in an opening at the top of the tube portion 61. In the state in which the storage chamber cover 60 has been mounted on the storage chamber 31, the top wall 62 blocks the upper end of the storage chamber 31. Therefore, the storage chamber cover 60 reliably prevents the operator from directly touching the upper portion of the high-temperature storage chamber 31. The top wall 62 has a circular air line insertion hole 72 in its center. The air line insertion hole 72 allows the air line (not shown in the drawings) to pass into the interior. Arrows 73 that indicate the direction of rotation for removing the screw cover 44 are formed on the top wall 62 around the air line insertion hole 72. By looking at the arrows 73, the operator can easily determine the direction of rotation for removing the screw cover 44.

The storage chamber cover 60 is mainly provided with recessed portions 63 to 66, vent holes 68, projecting portions 70, and cover fixing portions 75.

The recessed portions 63 to 66 will be explained. As shown in FIGS. 2, 5, and 6, the tube portion 61 includes a front recessed portion 63, a rear recessed portion 64, a right recessed portion 65, and a left recessed portion 66 (hereinafter collectively called the recessed portions 63 to 66), with shapes that are recessed toward the inside. The front recessed portion 63 is formed on the front face of the tube portion 61, the rear recessed portion 64 is formed on the rear face, the right recessed portion 65 is formed on the right face, and the left recessed portion 66 is formed on the left face. The shapes of the recessed portions 63 to 66 are shapes that are curved smoothly toward the inside. The shapes of the four recessed portions 63 to 66 are all the same except for the presence or absence of the vent holes 68, which will be described later. The recessed portions 63 to 66 are formed such that they extend toward the upper end of the tube portion 61 from slightly below the centers of the four faces of the tube portion 61.

When the operator rotates the storage chamber cover 60 by hand, the operator can place his fingers in the recessed portions 63 to 66 and the palm of his hand on the corners of the tube portion 61. Therefore, the operator can easily grasp the corners of the tube portion 61 and rotate the storage chamber cover 60. Even when the operator is wearing heat-resistant gloves, the operator can easily and safely perform the mounting and the removing of the storage chamber cover 60 and the screw cover 44.

The vent holes 68 will be explained. As shown in FIGS. 2, 5, and 6, the storage chamber cover 60 has at least one of the vent holes 68 on at least one side of the tube portion 61 and the top wall 62. Air whose temperature has been raised by the heating of the storage chamber 31 passes through the vent holes 68 and flows to the outside of the storage chamber cover 60. Therefore, the temperature of the storage chamber cover 60 is lower than if the vent holes 68 are not formed. The operator can perform work more safely.

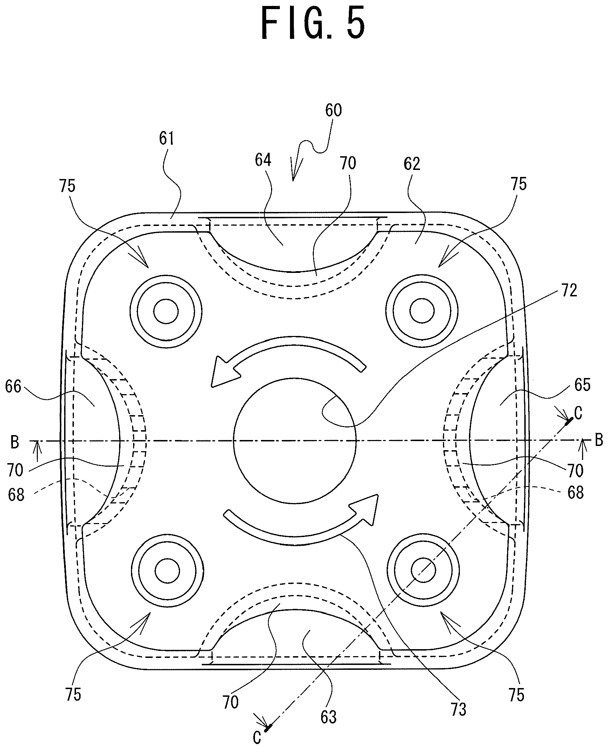

The storage chamber cover 60 according to the present embodiment has the vent holes 68 in the tube portion 61 and not in the top wall 62. Therefore, the vent holes 68 face toward the side. Because the vent holes 68 in the storage chamber cover 60 face toward the side, the possibility is reduced that dirt that falls from above will penetrate into the interior of storage chamber cover 60 through the vent holes 68. As shown in FIGS. 5 to 7, the storage chamber cover 60 has five of the vent holes 68 in each of the upper edge portion of the right recessed portion 65 and the upper edge portion of the left recessed portion 66. Air that has reached a high temperature rises in the interior of the storage chamber cover 60. Therefore, the storage chamber cover 60 can flow the high-temperature air efficiently to the outside through the vent holes 68 in the top wall 62 side of the tube portion 61 (in the upper portion of the tube portion 61).

As described previously, the operator places his fingers in the recessed portions 63 to 66 when the operator rotates the storage chamber cover 60. The operator's fingers can easily be placed in the areas of the right recessed portion 65 and the left recessed portion 66 where the vent holes 68 have been formed. Therefore, the operator can easily and safely perform the mounting and the removing of the storage chamber cover 60 and the screw cover 44.

When the storage chamber cover 60 is rotated until the lug portions 46 (refer to FIG. 4) come into contact with the ends of the helical grooves 40, the front recessed portion 63 stops such that it faces the front side. The operator performs work at the front side of the cloth bonding apparatus 1. The storage chamber cover 60 has the vent holes 68 in the right recessed portion 65 and the left recessed portion 66, and does not have the vent holes 68 in the front recessed portion 63. Therefore, the storage chamber cover 60 can keep the operator out of the high-temperature air that has been discharged from the vent holes 68 to strike the operator who is performing work at the front side.

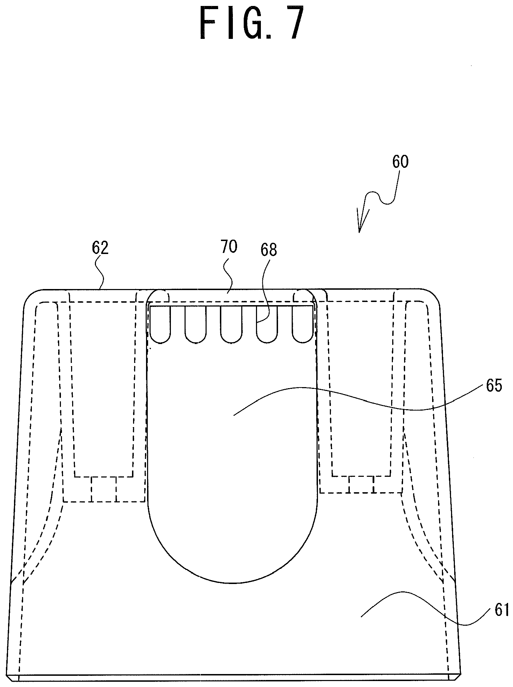

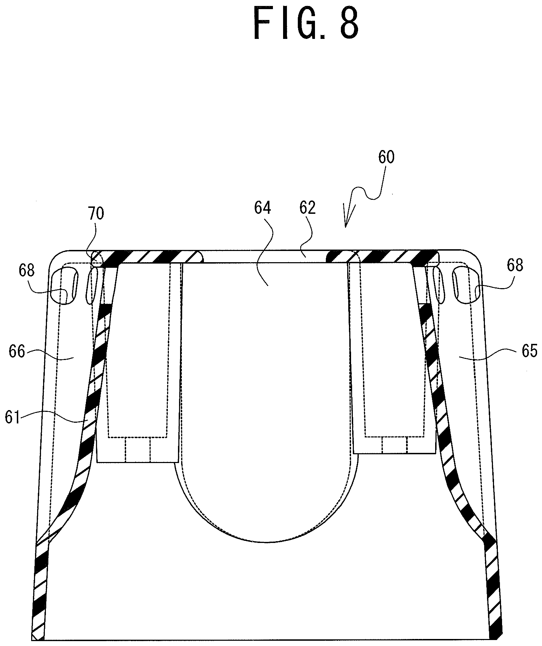

The projecting portions 70 will be explained. As shown in FIG. 8, the storage chamber cover 60 is provided with the projecting portions 70 at the upper edges of the recessed portions 63 to 66 (only the recessed portions 65, 66 are shown in FIG. 8). The projecting portions 70 project in the direction away from the central axis (toward the outer side) of the tube portion 61. When the operator carries the storage chamber cover 60 with his hand on the recessed portions 63 to 66, the operator's hand gets a hold on the projecting portions 70. Therefore, the projecting portions 70 can reduce the possibility that the operator will drop the storage chamber cover 60, even when the operator is wearing the slippery heat-resistant gloves. As shown in FIGS. 7 and 8, the projecting portion 70 at the upper edge of the right recessed portion 65 and the projecting portion 70 at the upper edge of the left recessed portion 66 are formed at the upper edges of the vent holes 68. Therefore, the projecting portions 70 can reduce the possibility that dirt will enter through the vent holes 68.

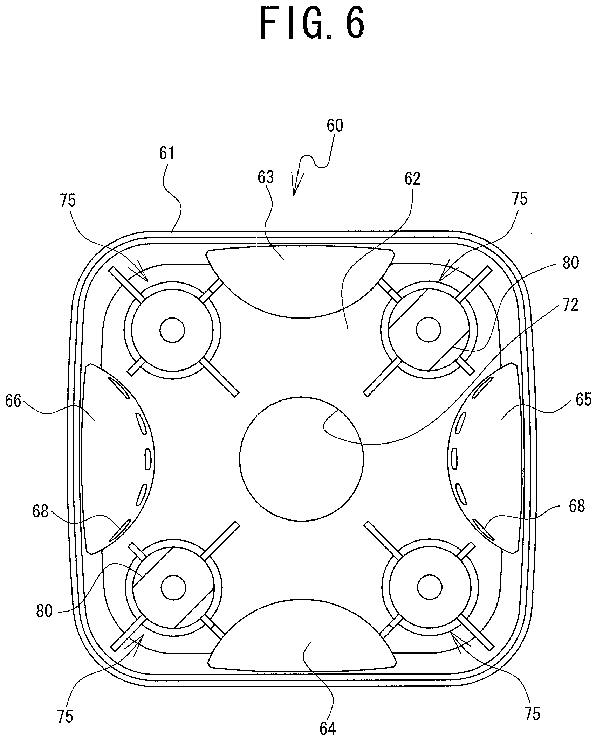

The cover fixing portions 75 will be explained. As shown in FIGS. 5 and 6, the storage chamber cover 60 is provided with the cover fixing portions 75 at the right front side, the right rear side, the left front side, and the left rear side. The cover fixing portions 75 fix the screw cover 44 to the storage chamber cover 60.

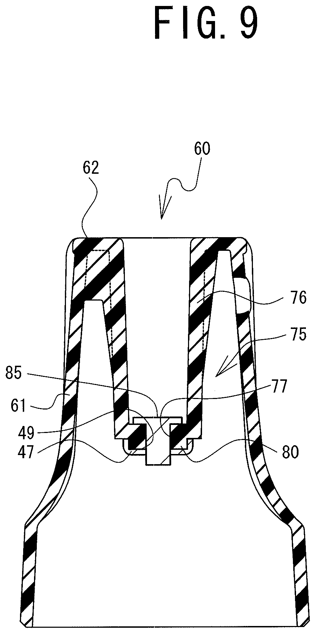

FIG. 9 is a vertical sectional view of the cover fixing portion 75 at the right front side of the storage chamber cover 60. The cover fixing portion 75 is provided with a concave portion 76, a screw hole 77, and a fixing screw 85. The concave portion 76 is a portion that is concave downward from the wall surface of the top wall 62. The screw hole 77 is formed in the bottom portion of the concave portion 76. The metal fixing screw 85 fixes the screw cover 44 to the storage chamber cover 60 by fastening the screw hole in the slotted piece 47 of the screw cover 44 (refer to FIG. 3) to the screw hole 77 of the concave portion 76. Once the screw cover 44 is fixed to the storage chamber cover 60, the axis of rotation of the screw cover 44 is aligned with the central axis of the tube portion 61 of the storage chamber cover 60. Because the screw hole 77 is formed in the bottom portion of the concave portion 76, the head of the fixing screw 85 is not exposed on the surface of the top wall 62. It is therefore difficult for the operator to touch the metal fixing screw 85, which has high thermal conductivity, so the possibility that the operator will be burned is reduced.

As shown in FIG. 9, the concave portions 76 at the right front side and the left rear side of the storage chamber cover 60 are provided with rotation preventing portions 80 at their lower ends. The rotation preventing portions 80 are projecting portions that project farther downward from the lower ends of the concave portions 76. The rotation preventing portions 80 engage into the fixing concave portions 49 that are formed in the slotted pieces 47 of the screw cover 44. Engaging the rotation preventing portions 80 into the fixing concave portions 49 prevents the screw cover 44 from rotating in relation to the storage chamber cover 60. Therefore, the screw cover 44 can be fixed more reliably than when the screw cover 44 is fixed to the storage chamber cover 60 only by the fixing screws 85. The operator fastens the fixing screws 85 after fitting the rotation preventing portions 80 into the fixing concave portions 49, so the screw cover 44 can easily be fixed to the storage chamber cover 60 at the proper angle.

As shown in FIG. 6, of the four cover fixing portions 75, the cover fixing portions 75 at the right front side and the left rear side of the storage chamber cover 60 have the rotation preventing portions 80. The cover fixing portions 75 at the right rear side and the left front side of the storage chamber cover 60 do not have the rotation preventing portions 80. Therefore, the shape of the storage chamber cover 60 is axially symmetrical around the central axis of the tube portion 61. As explained previously, the screw cover 44 is provided with the slotted pieces 47 at the right front side and the left rear side and is provided with the unslotted pieces 48 at the right rear side and the left front side. The rotation preventing portions 80 engage with the fixing concave portions 49 of the slotted pieces 47 only when the storage chamber cover 60 is adjusted to the predetermined angle in relation to the screw cover 44. When the rotation preventing portions 80 fits into the fixing concave portions 49, the storage chamber cover 60 is in the appropriate orientation, where the vent holes 68 face the right side and the left side. Therefore, the operator can easily fix the screw cover 44 to the storage chamber cover 60 by adjusting the orientation of the storage chamber cover 60.

According to the present embodiment, by rotating the storage chamber cover 60, the operator can firmly mount the screw cover 44, which has been fixed to the inner side of the storage chamber cover 60, on the opening portion 39 of the storage chamber 31. Therefore, the operator can reliably seal off the interior portion of the storage chamber 31. Because the storage chamber cover 60 is positioned on the outside of the screw cover 44, the temperature of the storage chamber cover 60 is lower than the temperature of the screw cover 44 when the temperature of the storage chamber 31 is high. Therefore, the operator can mount and remove the screw cover 44 more safely than when the operator rotates the screw cover 44 by touching the screw cover 44 directly. The tube portion 61 of the storage chamber cover 60 has the recessed portions 63 to 66 that are recessed toward the inside. The operator rotates the storage chamber cover 60 by placing his fingers on the recessed portions 63 to 66, so his hand tends not to slip, even when he is wearing the heat-resistant gloves. Therefore, the operator can easily and safely perform the mounting and the removing of the screw cover 44.

Various modifications can be made to the embodiment that is described above. For example, the tube portion 61 may be a round tube instead of a square tube. Even when the tube portion 61 is a round tube, the operator can easily rotate the storage chamber cover 60 by placing his hand on the recessed portions 63 to 66 that are formed in the side faces of the tube portion 61. The number, the shapes, and the like of the recessed portions 63 to 66 can be modified. For example, the shapes of the recessed portions 63 to 66 do not have to be curved smoothly toward the inside. The recessed portions 63 to 66 may also extend from the upper edges to the lower edges of the wall surfaces of the tube portion 61. The recessed portions 63 to 66 may also be formed such that only the central portions of the wall surfaces are recessed. The storage chamber cover 60 may also have the recessed portions only on the right side face and the left side face of the tube portion 61.

The structure for fixing the screw cover 44 to the storage chamber cover 60 may also be modified. For example, the screw cover 44 may also be fixed to the storage chamber cover 60 using clips or the like instead of the fixing screws 85. It is not necessary for the central axis of the tube portion 61 of the storage chamber cover 60 to be aligned to the axis of rotation of the screw cover 44, as long as it is parallel to the axis of rotation of the screw cover 44. Even if the axis of rotation of the tube portion 61 and the axis of rotation of the screw cover 44 are not aligned, the operator can perform the mounting and the removing of the screw cover 44 by rotating the storage chamber cover 60.

The shapes, the positions, the number, and the like of the vent holes 68 can be modified. For example, the vent holes 68 may also be formed in the top wall 62. The vent holes 68 may also be formed in any location other than the recessed portions 63 to 66 of the tube portion 61. It is preferable for the vent holes 68 to be formed in the upper edge portions of the recessed portions 65, 66, but the vent holes 68 may also be set apart from the upper edge portions. The storage chamber cover 60 may also have a single horizontally long hole instead of the five vent holes 68.

In the embodiment that is described above, the rotation preventing portions 80 have projecting shapes, and the fixing concave portions 49 of the screw cover 44 have slot shapes. Conversely, the rotation preventing portions 80 may have slot shapes, and the screw cover 44 may be provided with fixing projecting portions. The recessed portions that form the slotted pieces 47 do not have to be slot-shaped. The recessed portions may be any shape that fits together with the rotation preventing portions 80.

## Claims

1. Assembly, comprising
- a storage chamber cover (60),
- a storage chamber (31) that stores an adhesive inside and that melts the stored adhesive by heating, and
- a screw cover (44) that is mounted by being screwed onto an opening portion (39) of the storage chamber (31), in a state in which an axis of rotation of the screw cover (44) and a central axis of the tube portion (61) are parallel to one another,
wherein the storage chamber cover (60) comprises:
- a tube portion (61) that has a tube shape and that covers an outer circumference of the storage chamber (31), wherein the at least one recessed portion (63-66) that is recessed toward the inside is formed in the tube portion;
- a top wall (62) that is formed on one of two openings in the tube portion (61); and
- a cover fixing portion (75) that fixes, on an inner side of the tube portion (61), the screw cover (44).

2. The assembly according to claim 1, **characterized by** further comprising:
a vent hole (68) is formed in at least one of the tube portion (61) and the top wall (62).

3. The assembly according to claim 2, **characterized in that**
the storage chamber cover (60) is mounted on an upper portion of the storage chamber (31) such that the top wall (62) covers the top of the storage chamber (31), and
the vent hole (68) is formed in the top wall (62) side in the recessed portion (63-66).

4. The assembly according to any one of claims 1 to 3, **characterized by** further comprising:
a projecting portion (70) that is formed on an upper edge portion of the recessed portion (63-66) to project in a direction away from the central axis of the tube portion (61).

5. The assembly according to any one of claims 1 to 4, **characterized in that**
the cover fixing portion (75) is provided with a fixing screw (85) that is screwed into a screw hole (77) formed in the screw cover (44) and with a rotation preventing portion (80) that fits together with one of a fixing concave portion (49) and a fixing projecting portion formed in the screw cover (44).

6. A cloth bonding apparatus (1), **characterized by** comprising:
the assembly according to any one of claims 1 to 5;
wherein cloths are bonded with an adhesive that is stored in the storage chamber (31).

## Patentansprüche

1. Baugruppe, aufweisend:
- eine Speicherkammerabdeckung (60),
- eine Speicherkammer (31), die ein Klebemittel im Inneren aufbewahrt und die das aufbewahrte Klebemittel durch Erhitzen schmilzt, und
- einen Schraubdeckel (44), der durch Verschrauben auf einen Öffnungsabschnitt (39) der Speicherkammer (31) montiert wird, in einem Zustand in dem eine Rotationsachse des Schraubdeckels (44) und eine zentrale Achse des Rohrabschnitts (61) parallel zueinander sind;
wobei die Speicherkammerabdeckung (60) aufweist:
- einen Rohrabschnitt (61) der rohrförmig ist und einen Außenumfang der Speicherkammer (31) bedeckt, wobei wenigstens ein vertiefter Abschnitt (63-66), der in Richtung der Innenseite vertieft ist, in dem Rohrabschnitt ausgebildet ist;
- eine obere Wand (62) die in einer von zwei Öffnungen in dem Rohrabschnitt (61) ausgebildet ist; und
- einen Abdeckungsbefestigungsabschnitt (75), der den Schraubdeckel (44) an einer inneren Seite des Rohrabschnitts (61) befestigt.

2. Die Baugruppe nach Anspruch 1, **dadurch gekennzeichnet, dass** sie weiterhin aufweist:
ein Entlüftungsloch (68) das in wenigstens einem der Rohrabschnitte (61) und der oberen Wand (62) ausgebildet ist.

3. Die Baugruppe nach Anspruch 2, **dadurch gekennzeichnet, dass**
die Speicherkammerabdeckung (60) so auf einem oberen Abschnitt der Speicherkammer (31) montiert ist, dass die obere Wand (62) die Oberseite der Speicherkammer (31) bedeckt, und
das Entlüftungsloch (68) in einer Seite der oberen Wand (62) in dem vertieften Abschnitt (63-66) ausgebildet ist.

4. Die Baugruppe nach einem der Ansprüche 1 bis 3, **dadurch gekennzeichnet, dass** sie weithin aufweist:
einen vorstehenden Abschnitt (70) der in einem oberen Randabschnitt des vertieften Abschnitts (63-66) ausgebildet ist, um in eine Richtung weg von der zentralen Achse des Rohrabschnitts (61) hinauszuragen.

5. Die Baugruppe nach einem der Ansprüche 1 bis 4, **dadurch gekennzeichnet, dass**
der Abdeckungsbefestigungsabschnitt (75) mit einer Fixierschraube (85) versehen ist, die in ein Schraubenloch (77) geschraubt ist, das in dem Schraubdeckel (44) vorgesehen ist, und mit einem Rotationsverhinderungsabschnitt (80), der mit einem konkaven Befestigungsabschnitt (49) und einem vorstehendem Befestigungsabschnitt, der in der Schraubdeckel (44) ausgebildet ist, zusammen passt.

6. Eine Vorrichtung zum Verbinden von Textilien (1), **dadurch gekennzeichnet, dass** sie aufweist:
eine Baugruppe nach einem der Ansprüche 1 bis 5;
wobei Stoffe mit einem Klebemittel verbunden werden, das in der Aufbewahrungskammer (31) aufbewahrt wird.

## Revendications

1. Assemblage, comprenant
- un couvercle de chambre de stockage (60),
- une chambre de stockage (31) qui stocke un adhésif à l'intérieur et qui fait fondre l'adhésif stocké par chauffage, et
- un couvercle à vis (44) qui est monté en étant vissé sur une portion d'ouverture (39) de la chambre de stockage (31), dans un état dans lequel un axe de rotation du couvercle à vis (44) et un axe central de la portion de tube (61) sont parallèles l'un à l'autre, dans lequel le couvercle de chambre de stockage (60) comprend :
- une portion de tube (61) qui présente une forme de tube et qui recouvre une circonférence extérieure de la chambre de stockage (31), dans lequel l'au moins une portion évidée (63-66) qui est évidée vers l'intérieur est formée dans la portion de tube,
- une paroi supérieure (62) qui est formée sur l'un de deux ouvertures dans la portion de tube (61) ; et
- une portion de fixation de couvercle (75) qui fixe, sur un côté intérieur de la portion de tube (61), le couvercle à vis (44).

2. Ensemble selon la revendication 1, **caractérisé par le fait qu'**il comprend en outre :
un trou de ventilation (68) qui est formé dans au moins l'une de la portion de tube (61) et de la paroi supérieure (62).

3. Ensemble selon la revendication 2, **caractérisé en ce que**
le couvercle de chambre de stockage (60) est monté sur une portion supérieure de la chambre de stockage (31) de sorte que la paroi supérieure (62) recouvre le dessus de la chambre de stockage (31), et
le trou de ventilation (68) est formé dans le côté de paroi supérieure (62) dans la portion évidée (63-66).

4. Ensemble selon l'une quelconque des revendications 1 à 3, **caractérisé par le fait qu'**il comprend en outre :
une portion en saillie (70) qui est formée sur une portion d'arête supérieure de la portion évidée (63-66) pour faire saillie dans une direction à l'écart de l'axe central de la portion de tube (61).

5. Ensemble selon l'une quelconque des revendications 1 à 4, **caractérisé en ce que**
la portion de fixation de couvercle (75) est dotée d'une vis de fixation (85) qui est vissée dans un trou de vis (77) formé dans le couvercle à vis (44) et d'une portion d'empêchement de rotation (80) qui s'adapte conjointement avec l'une d'une portion concave de fixation (49) et d'une portion de saillie de fixation formée dans le couvercle à vis (44).

6. Appareil de liaison de tissu (1), **caractérisé par le fait qu'**il comprend :
l'assemblage selon l'une quelconque des revendications 1 à 5 ;
dans lequel des tissus sont liés avec un adhésif qui est stocké dans la chambre de stockage (31).
